# EUROPÄISCHE PATENTANMELDUNG

(11) **EP 1 243 910 A1**
(43) Veröffentlichungstag der Anmeldung: **25.09.2002**
(21) Anmeldenummer: 01107115.6
(22) Anmeldetag: 22.03.2001
(51) Int. Cl.: G01N 1/31

(54) **Vorrichtung zur Gewebepräparation und Halterung für Behandlungsbehälter zur Gewebepräparation**

(71) Anmelder: Leica Mikrosysteme GmbH, 1170 Wien (AT)
(72) Erfinder: Zimmermann, Michael, 2333 Leopoldsdorf (AT)
(74) Vertreter: Reichert, Werner F., Dr.

(57) **Zusammenfassung**

Eine Vorrichtung (1) zur Gewebepräparation für die Gewebeeinbettung, mit einem Transportteller (15), der einen umlaufenden Rand (15c) definiert. An dem umlaufenden Rand (15c) sind mehrere Aussparungen (16) ausgebildet, die jeweils aus einem kreisförmigen Ausschnitt (16a) bestehen, die derart angeordnet sind, dass sie zum umlaufenden Rand (15c) hin eine Öffnung (16b) aufweisen und wobei der Transportteller (15) von einem Gehäuse (5) umgeben ist, das eine innere Oberseite (8a) definiert, auf der eine Heiz- und Kühleinrichtung (3), vorgesehen ist. Jeder Aussparung (16) ist eine Prägung (32) am Transportteller (15) zugeordnet, die mit einem Befestigungselement (33,34,35,36) eines Behandlungsbehälters (17) derart zusammenwirkt, dass ein fester und definierter Sitz des Behandlungsbehälters (17) auf den Transportteller (15) erzielbar ist.

## Beschreibung

Die Erfindung betrifft eine Vorrichtung zur Gewebepräparation für die Gewebeeinbettung. Im besonderen betrifft die Erfindung. Im besonderen betrifft die Erfindung eine Vorrichtung zur Gewebepräparation für die Gewebeeinbettung, mit einem Transportteller, der einen umlaufenden Rand definiert, an dem mehrere Aussparungen ausgebildet sind, die aus kreisförmigen Ausschnitten bestehen, die derart angeordnet sind, dass sie zum umlaufenden Rand hin eine Öffnung aufweisen und wobei der Transportteller von einem Gehäuse umgeben ist, das eine innere Oberseite definiert, auf der eine Heiz- und Kühleinrichtung vorgesehen ist.

Ferner betrifft die Erfindung eine Halterung für Behandlungsbehälter zur Gewebepräparation. Im besonderen betrifft die Erfindung. Im besonderen betrifft die Erfindung. Im besonderen betrifft die Erfindung eine Halterung für Behandlungsbehälter zur Gewebepräparation, mit einem Boden, an dem ein Befestigungselement ausgeformt ist, das mit einem Transportteller 15 zusammenwirkt, der einen umlaufenden Rand definiert.

In dem US Patent 4,688,517 ist eine Vorrichtung zum Behandeln von Gewebeproben offenbart. Auf einem drehbaren Tisch ist eine Vielzahl von Behandlungsbehältern für die Probenvorbereitung vorgesehen. Der Tisch ist drehbar, so daß die Behandlungsbehälter zu einer Behandlungsstation verbracht werden können, an der die Gewebeproben nacheinander in verschieden Behandlungsflüssigkeiten eingetaucht werden. Zur geeigneten Temperierung der jeweils verwendeten Behandlungsflüssigkeiten ist eine Heiz- und Kühleinrichtung vorgesehen, die fest mit dem Gehäuse der Vorrichtung verbunden ist. Der Tisch ist nicht nur drehbar sondern auch in Richtung der Achse anhebbar und absenkbar. Die Behandlungsbehälter sind lediglich in den Aussparungen des Tisches eingerastet. Ein fester und definierter Sitz der Behandlungsbehälter auf dem Tisch ist nicht gegeben.

Eine Aufgabe der Erfindung ist es, eine Vorrichtung zur Gewebepräparation für die Gewebeeinbettung anzugeben, die eine sichere und zuverlässige Handhabung der Gewebepräparation für die Gewebeeinbettung erlaubt

Die objektive Aufgabe wird durch eine Vorrichtung gelöst, die dadurch gekennzeichnet, dass jeder Aussparung jeweils eine Prägung zugeordnet ist, die mit einem Behandlungsbehälter derart zusammenwirkt, dass ein fester und definierter Sitz der Behandlungsbehälter auf den Transportteller erzielbar ist.

Eine weitere Aufgabe der Erfindung ist es, eine Halterung für Behandlungsbehälter zur Gewebepräparation anzugeben, die eine störungsfreie Verwendung der Behandlungsbehälter erlauben.

Die objektive Aufgabe wird durch eine Halterung gelöst, die dadurch gekennzeichnet, dass am Befestigungselement eine Nase ausgeformt ist, die im eingesetzten Zustand des Behandlungsbehälters an eine Prägung am Transportteller anschlägt.

Ein Vorteil der Erfindung ist es, durch die spezielle Ausgestaltung der Behandlungsbehälter und des Transporttellers ein fester Sitz der Behandlungsbehälter erzielbar ist. Dieser feste und definierte Sitz ist für den reibungslosen Ablauf der Gewebepräparation unbedingt erforderlich. Bei der Drehung des Transporttellers und beim Anheben und Absenken des Transporttellers ist es notwendig, dass die Behandlungsbehälter ohne zu Verkannten oder Anzustoßen in die Aufnahmen für die Behandlungsbehälter gelangen.

Die Aufnahmen sind mit eine Heiz- und Kühleinrichtung ist vorgesehen, die leicht auswechselbar ist, so dass für den Benutzer auf einfache Weise zwischen Benhandlungsbehältern unterschiedlicher Größe gewechselt werden kann. Dies ist dann von Vorteil, wenn große Gewebestücke für die Gewebeeinbettung präpariert werden müssen. Hinzu kommt, dass die ebenso ausgebildete Schwenkbarkeit der Heiz und Kühleinrichtung das Auswechseln des gesamten Transporttellers erheblich erleichtert. Die Heiz- und Kühleinrichtung wird somit gerade aus der Aussparung im Gehäuse gehoben werden. Es ist nicht erforderlich, dass einzelne Behandlungsbehälter vom Transportteller abgenommen werden müssen, um das Auswechseln zu ermöglichen. Das Auswechseln der Heiz- und Kühleinrichtung kann besonders einfach durchgeführt werden. Hierzu sind die Stifte aus den Scharnieren zu entfernen und anschließend kann die gesamte Heiz und Kühleinrichtung abgenommen werden. Eine Kodierung wird an die Steuerund Regeleinehit im Gehäuse übermittelt, die dann entsprechend die Drehund Hubbewegungen des Transporttellers steuert. Bei den unterschiedlichen Heiz- und Kühleinrichtungen sind die Aufnahmen für die Behandlungsbehälter unterschiedlich groß ausgestaltet und jeweils fest mit einer Stromversorgung für die Heiz- und Kühleinrichtung verbunden. In einer Ausführungsform ist die Aufnahme für die Behandlungsbehälter derart ausgestaltet, dass eine erste und einer zweite Kammer für Behandlungsbehälter vorgesehen sind, wobei die zweite Kammer mit einer Abdeckung versehen ist. Die erste Kammer dient zum temperieren der Behandlungsflüssigkeit im Behandlungsbehälter und zum Eintauchen der Gewebeprobe in den Behandlungsbehälter. Die zweite Kammer kann zum Vorheizen der Behandlungsflüssigkeit im Behandlungsbehälter verwendet werden. Die Abdeckung verhindert ein unnötiges Verdampfen der Behandlungsflüssigkeit.

Die Prägung am Transportteller in der Nähe der Aussparungen hat den Vorteil, dass für die Behandlungsbehälter ein definierter Anschlag erzielbar ist. Die Behandlungsbehälter besitzen ein Abstandselement, das mit seiner schmalen Seite durch die Öffnungen am Rand des Transporttellers eingeführt werden kann. Durch Drehen der Behandlungsbehälter im kreisförmigen Ausschnitt wird ein fester Sitz der Behandlungsbehälter in der Aussparung erreicht. Die Drehbewegung wird dadurch beschränkt, dass die Nase am Behandlungsbehälter mit der Prägung am Transportteller zusammenwirkt.

Ferner ist von Vorteil, dass unterschiedlichen Typen der Behandlungsbehälter ein identisches Befestigungselement zum Haltern am Transportteller aufweisen. Wobei das Befestigungselement symmetrisch um einen Mittelpunkt des Behandlungsbehälter aufgebaut ist. Das Befestigungselement ist aus einem ersten und zweiten Kreissegment und aus einem ersten und zweiten die Kreissegmente verbindenden Steg, aufgebaut. Wobei der erste und der zweite Steg einen Abstand aufweisen, der im wesentlichen der Öffnung der Aussparung am Rand des Transporttellers entspricht. Der Durchmesser des ersten und zweiten Kreissegments entspricht im wesentlichen dem Durchmesser der Aussparung.

In der Zeichnung ist der Erfindungsgegenstand schematisch dargestellt und wird anhand der Figuren nachfolgend beschrieben. Dabei zeigen:
Fig. 1 eine perspektivische Ansicht der Vorrichtung zur Gewebepräparation für die Gewebeeinbettung;
Fig. 2 eine perspektivische Teilansicht des Transporttellers zusammen mit Behandlungsbehältern zur Gewebepräparation;
Fig. 3a eine Seitenansicht eines kleinen Behandlungsbehälters;
Fig. 3b eine Schnittansicht des kleinen Behandlungsbehälters aus Fig. 3a entlang der Linie A-A;
Fig. 3c eine Schnittansicht des kleinen Behandlungsbehälters aus Fig. 3a entlang der Linie B-B;
Fig. 4a eine Seitenansicht eines großen Behandlungsbehälters
Fig. 4b eine Schnittansicht des großen Behandlungsbehälters aus Fig. 4a entlang der Linie A-A; und
Fig. 4c eine Schnittansicht des großen Behandlungsbehälters aus Fig. 4a entlang der Linie B-B.

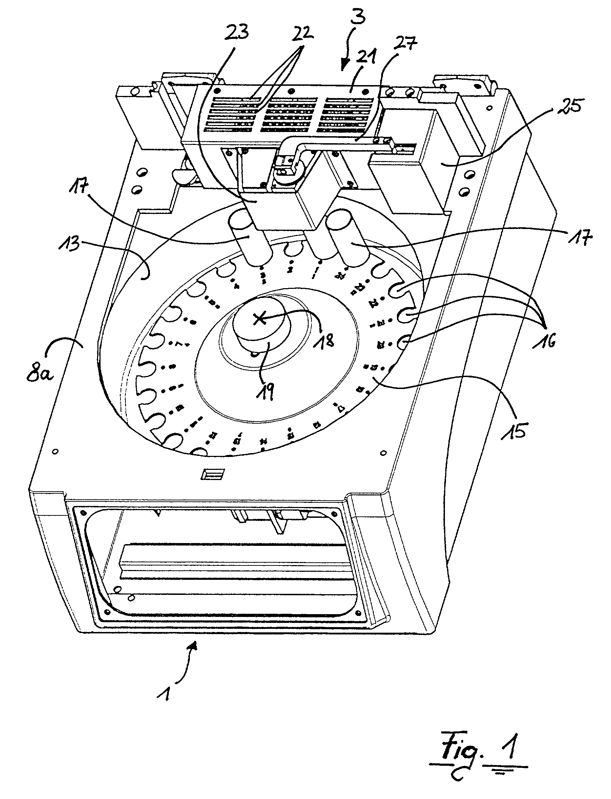

Fig. 1 zeigt eine perspektivische Ansicht der Vorrichtung 1 zur Gewebepräparation für die Gewebeeinbettung ohne einen noch dafür vorgesehenen Deckel (nicht dargestellt). Das Gehäuse 5 hat eine innere Oberseite 8a ausgebildet, in der eine Aussparung 13 vorgesehen ist, durch die der Zugang ins Innere der Vorrichtung 1 ermöglicht ist. Durch die Aussparung 13 ist der Zugriff auf einen Transportteller 15, der im Innern der Gehäuses 5 angeordnet ist, möglich. Der Transportteller 15 ist in dieser Ausführungsform rund ausgestaltet und besitzt an seinem Rand eine Vielzahl von Aussparungen 16, die zur Aufnahme von Behandlungsbehältern 17 dienen. Auf den Transportteller können Behandlungsbehälter 17 unterschiedlicher Größe aufgesetzt werden. Der Transportteller 15 ist um eine Achse 18 frei drehbar und kann zusätzlich in axialer Richtung der Achse 18 angehoben und abgesenkt werden. Der Transportteller 15 ist mittels eines Sicherungselements 19 gesichert. Mit dem Gehäuse 5 ist eine Heiz- und Kühleinrichtung 3 verbunden. Die Heiz- und Kühleinrichtung 3 besteht aus einer Stromversorgung 21, die mit mehreren Lüftungsschlitzen 22 versehen ist, um die erzeugte Wärme abzutransportieren. Mit der Stromversorgung 21 ist eine Aufnahme 23 für die Behandlungsbehälter 17 verbunden, die derart angeordnet ist, dass sie zumindest teilweise in den Bereich der Aussparung 13 hineinragt. Wie bereits oben erwähnt kann der Transportteller 15 in Richtung der Achse 18 angehoben und abgesenkt werden. Im angehobenen Zustand befindet sich zumindest ein Behandlungsbehälter 17 in der Aufnahme 23 und kann in entsprechender Weise temperiert werden. In den Behandlungsbehältern befinden sich unterschiedliche Flüssigkeiten, die zur Präparation der Gewebeproben notwendig sind. Neben der Heiz- und Kühleinrichtung 3 ist eine Mechanik 25 vorgesehen mit der ein Arm 27 verbunden ist. An dem Arm 27 ist eine Gewebeprobe (nicht dargestellt) angebracht, die einem entsprechenden Präparationsprogramm unterzogen wird. Der Arm 27 kann sich auf und ab bewegen, wodurch die Gewebeprobe in die Flüssigkeit getaucht wird, die sich im dem Behandlungsbehälter 17 befindet, der sich gerade in der Aufnahme 23 befindet. Mit dem Gehäuse 5 sind ebenfalls Scharnierelemente 29, mit denen der Deckel 6 verbunden ist. Wie bereits erwähnt können kleine Behandlungsbehälter 17a und große Behandlungsbehälter 17b verwendet werden. Entsprechend der Größe der Behandlungsbehälter ist die Aufnahme 23 ausgestaltet.

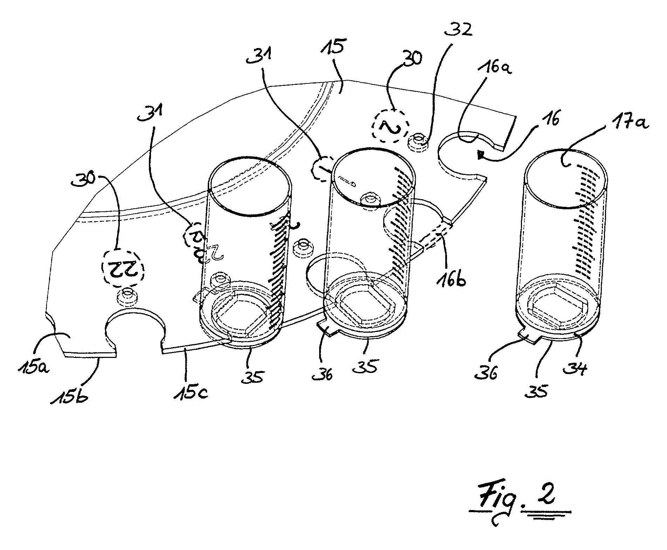

Eine Teilansicht des Transporttellers 15 ist in Fig. 2 dargestellt. Dabei ist ebenso das zusammenwirken des Behandlungsbehälters 17 mit dem Transportteller 15 wiedergegeben. Der Transportteller 15 besitzt eine Oberseite 15a und eine Unterseite 15b. Auf der Oberseite 15a des Transportteller 15 ist unmittelbar gegenüber den Aussparungen 16 ein erster Nummernsatz 30 vorgesehen. Ein zweiter Nummernsatz 31 ist ebenfalls derart auf der Oberseite 15a des Transporttellers 15 angebracht, dass eine Nummer nur jeder zweiten Aussparung 16 zugeordnet ist. Dabei gilt der erste Nummernsatz 30 für die kleinen Behandlungsbehälter 17a (wie auch in Fig.2 gezeigt) und der zweite Nummernsatz 31 gilt für die großen Behandlungsbehälter 17b. Zwischen dem ersten Nummernsatz 30 und der Aussparung 16 ist eine Prägung 32 im Transportteller 15 angebracht, die auf der Unterseite 15b des Transporttellers 15 eine Erhöhung ausbildet. Die Aussparung 16 besteht aus einem kreisförmigen Ausschnitt 16a, der am Rand 15c des Transporttellers eine Öffnung 16b besitzt, die kleiner als der Durchmesser der Aussparung 16 ist. Die Behandlungsbehälter 17 sind vorzugsweise zylinderförmig ausgebildet und besitzen am Boden 33 eine umlaufende Einkerbung 34, die in etwa die Dicke des Randes 15c des Transporttellers 15 besitzt. Die Einkerbung 34 ist an der dem Boden 33 gegenüberliegenden Seite ebenfalls durch eine kreisrunde Scheibe 35 abgeschlossen. An der kreisrunden Scheibe 35 ist eine Nase 36 ausgeformt, die mit der Prägung 32 an der Unterseite 15b des Transporttellers 15 zusammenwirkt.

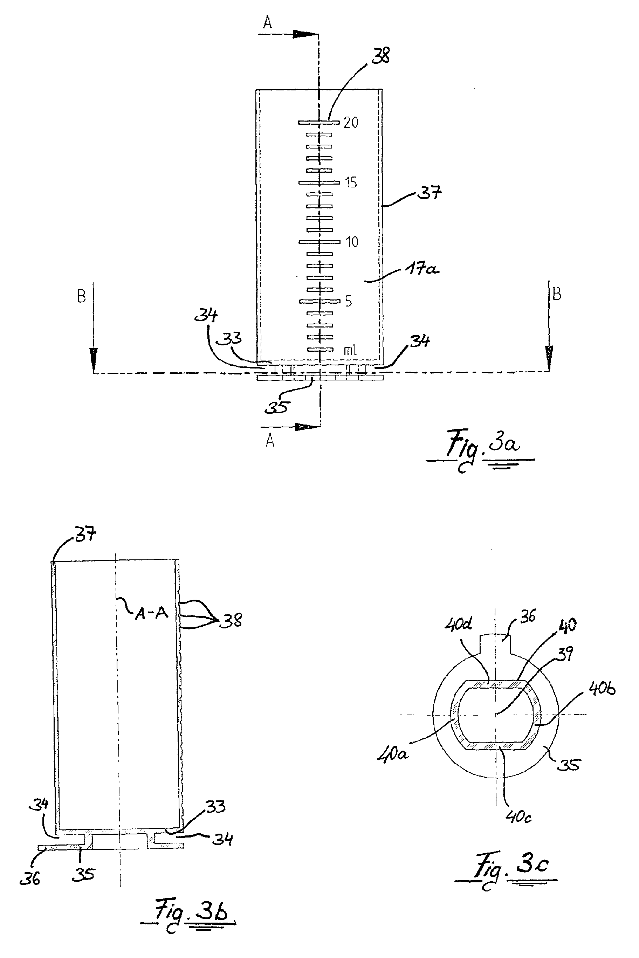

Die Seitenansicht des kleinen Behandlungsbehälters 17a ist in Fig. 3a dargestellt. Der kleine Behandlungsbehälter 17a besitzt eine zylinderförmige Wand 37, die durch einen Boden 33 abgeschlossen ist. Auf einem Teil der zylinderförmigen Wand 37 ist eine Skalierung 38 angebracht. In diesem Ausführungsbeispiel ist die Skalierung in die zylinderförmige Wand 37 des Behandlungsbehälters 17a eingeprägt. Am Boden 33 ist ein Befestigungselement 6 zum Haltern der Behandlungsbehälter 17 am Transportteller 15 ausgebildet. Dabei ist es unerheblich welcher Typ von Behandlungsbehälter Verwendung findet. Alle Behandlungsbehälter 17 besitzen das gleiche Befestigungselement 6. Zwischen dem Boden 33 und einer Scheibe 35 ist die umlaufende Einkerbung 34 ausgeformt. In Fig. 3b ist der kleine Behandlungsbehälter 17a im Schnitt entlang der Linie A-A dargestellt. Der Boden 33 und die Scheibe 35 sind durch die Einkerbung 34 derart voneinander beabstandet, dass dieser Abstand in etwa der Dicke des Randes 15c des Transporttellers 15c entspricht.

Fig. 3b zeigt einen Querschnitt durch den kleinen Behandlungsbehälter 17a aus Fig. 3a entlang der Linie A-A. Die Scheibe 35 besitzt an einer Stelle einen größeren Durchmesser. An dieser Stelle der Scheibe 35 ist eine Nase 36 ausgebildet. In Fig. 3c ist eine Ansicht des kleinen Behandlungsbehälters 17a entlang der Linie B-B dargestellt und zeigt deutlich die Form eines Abstandselements 38, das durch die Einkerbung 34 zwischen dem Boden 33 des Behandlungsbehälters 17a und der Scheibe 35 ausgebildet ist. Das Abstandselement 40 ist symmetrisch um einen Mittelpunkt 39 des kleinen Behandlungsbehälters 17a angeordnet. In der hier dargestellten Ausführungsform besteht das Abstandselement 40 aus einem ersten und zweiten Kreissegment 40a und 40b, die sich gegenüber liegen. Das erste und zweite Kreissegment 40a und 40b sind über einen ersten und zweiten Steg 40c und 40d miteinander verbunden, wobei der erste und der zweite Steg 40c und 40d zueinander parallel sind.

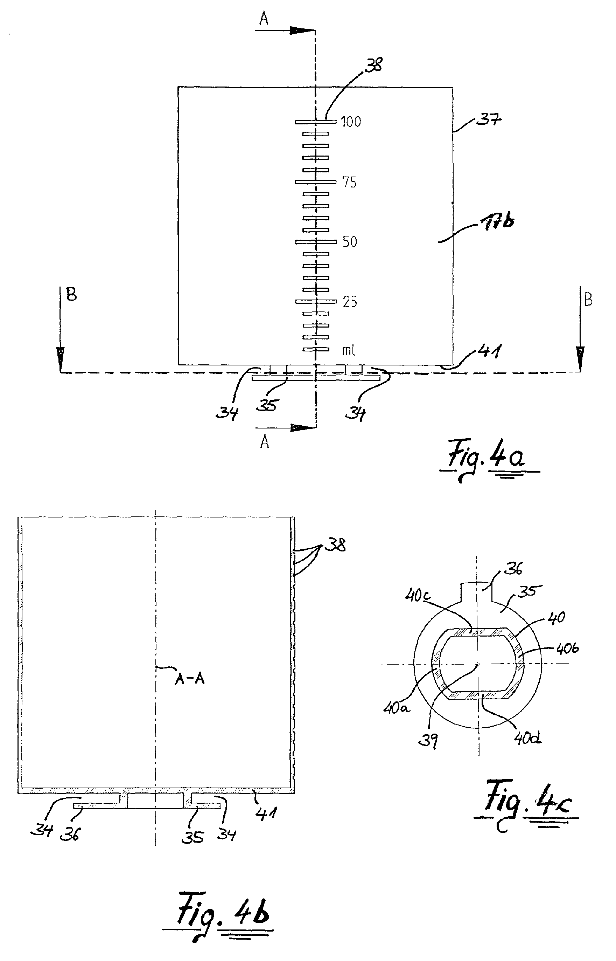

In den Fign. 4a bis 4c ist das Ausführungsbeispiel eines großen Behandlungsbehälters 17b dargestellt. Für alle Merkmale, die mit den Merkmalen aus den Fign. 3a bis 3b identisch sind, werden im weiteren mit dem gleichen Bezugszeichen gekennzeichnet. Die gossen Behandlungsbehälter 17b besitzen die gleiche Höhe wie die kleinen Behandlungsbehälter 17a, unterscheiden sich aber im Durchmesser. Somit können die großen Behandlungsbehälter 17a mehr Behandlungsflüssigkeit aufnehmen bzw. größere Probenstücke für die Präparation behandeln Wie bereits oben erwähnt ist die zylinderförmige Wand 37 der großen Behandlungsbehälter 17b mit einem Boden 41 mit großem Durchmesser verschlossen. Ebenso ist gegenüber dem Boden 41 die kreisrunde Scheibe 35 und die Einkerbung vorgesehen. Die Ansicht in Fig. 4c zeigt deutlich, dass das Abstandselement 40 und die Scheibe 35 gleich den in Fig. 3c dargestellten dimensioniert sind. Dies ist auch selbstverständlich, denn sowohl die kleinen wie auch die großen Behandlungsbehälter 17a und 17b werben am Transportteller 15 mittels der gleich dimensionierten Aussparung 16 befestigt.

Ebenso kann die Heiz- und Kühleinrichtung 3 (Fig. 1) ausgetauscht werden. Dies ist bei der Verwendung von unterschiedlichen Behandlungsbehältern notwendig. Bei der Verwendung der großen Behandlungsbehälter 17b muss die mit der Stromversorgung 21 verbundene Aufnahme 23 ebenso für die Aufnahme der großen Behandlungsbehälter 17b ausgestaltet sein. Hierzu ist kann die Heiz- und Kühleinrichtung 3 auf einfache Weise von abgenommen und gegen eine andere ausgetauscht werden. Ferner ist die Heiz- und Kühleinrichtung 3 ist mit der inneren Oberseite 8a des Gehäuses 5 über mindestens ein Scharnier (nicht dargestellt) schwenkbar mit der Vorrichtung 1 verbunden.

Die Erfindung wurde in bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichen liste:

- 1: Vorrichtung
- 3: Heiz- und Kühleinrichtung
- 5: Gehäuse
- 6: Befestigungselement
- 8a: innere Oberseite
- 13: Aussparung
- 14: Freisparung
- 15: Transportteller
- 15a: Oberseite
- 15b: Unterseite
- 15c: Rand
- 16: Aussparung
- 16a: kreisförmigen Ausschnitt
- 16b: Öffnung
- 17: Behandlungsbehälter
- 17a: kleine Behandlungsbehälter
- 17b: große Behandlungsbehälter
- 18: Achse
- 19: Sicherungselement
- 21: Stromversorgung
- 22: Lüftungsschlitze
- 23: Aufnahme
- 25: Mechanik
- 27: Arm
- 29: Scharnierelement
- 30: erster Nummernsatz
- 31: zweiter Nummernsatz
- 32: Prägung
- 33: Boden
- 34: umlaufende Einkerbung
- 35: kreisrunde Scheibe
- 36: Nase
- 37: zylinderförmige Wand
- 38: Skalierung
- 39: Mittelpunkt
- 40: Abstandselement
- 40a: erstes Kreissegment
- 40b: zweites Kreissegment
- 40c: erster Steg
- 40d: zweiter Steg
- 41: Boden

## Patentansprüche

1. Vorrichtung (1) zur Gewebepräparation für die Gewebeeinbettung, mit einem Transportteller (15), der einen umlaufenden Rand (15c) definiert, an dem mehrere Aussparungen (16) ausgebildet sind, die aus einem kreisförmigen Ausschnitt (16a) bestehen, der derart angeordnet ist, dass er zum umlaufenden Rand (15c) hin eine Öffnung aufweist und wobei der Transportteller (15) von einem Gehäuse (5) umgeben ist, das eine innere Oberseite (8a) definiert, auf der eine Heiz- und Kühleinrichtung (3), vorgesehen ist, **dadurch gekennzeichnet, dass** jeder Aussparung (16) jeweils eine Prägung (32) zugeordnet ist, die mit einem Behandlungsbehälter (17) derart zusammenwirkt, dass ein fester und definierter Sitz der Behandlungsbehälter (17) auf den Transportteller (15) erzielbar ist.

2. Vorrichtung nach Anspruch 1, **dadurch gekennzeichnet, dass** durch Drehen des Transporttellers (15) und anschließendes Anheben und Absenken des Transporttellers (15) jeweils ein Behandlungsbehälter (17) in eine Aufnahme (23) einführbar ist.

3. Vorrichtung nach Anspruch 1, **dadurch gekennzeichnet, dass** den Aussparungen (16) zwei verschiedene Nummernsätze (30, 31) derart zugeordnet sind, dass der erste Nummernsatz (30) bei durch den Einsatz großer Behandlungsbehälter (17b) abdeckbar ist.

4. Vorrichtung nach Anspruch 3, **dadurch gekennzeichnet, dass** bei Verwendung der großen Behandlungsbehälter (17b) im Vergleich zu den kleinen Behandlungsbehältern (17a) maximal nur die halbe Anzahl an großen Behandlungsbehältern (17b) auf dem Transportteller (15) einsetzbar ist.

5. Vorrichtung nach Anspruch 1, **dadurch gekennzeichnet, dass** mindestens ein Scharnierelement (29) an der Heiz- und Kühleinrichtung (3) an der Seite vorgesehen ist, die der Aufnahme (23) für die Behandlungsbehälter (17) abgewandt ist wodurch die Heiz- und Kühleinrichtung (3) zur Entnahme des Transporttellers (15) schwenkbar ist.

6. Vorrichtung nach Anspruch 1, **dadurch gekennzeichnet, dass** die unterschiedlichen Typen der Behandlungsbehälter (17) ein identisches Befestigungselement (6) zum Haltern am Transportteller (15) aufweisen.

7. Vorrichtung nach Anspruch 6, **dadurch gekennzeichnet, dass** das Befestigungselement (6) symmetrisch um einen Mittelpunkt (39) des Behandlungsbehälter (17) aufgebaut ist.

8. Vorrichtung nach Anspruch 7, **dadurch gekennzeichnet, dass** das Befestigungselement (6) aus einem ersten und zweiten Kreissegment (40a, 40b) und aus einem ersten und zweiten die Kreissegmente (40a, 40b) verbindenden Steg (40c, 40d), aufgebaut ist, wobei der erste und der zweite Steg (40c, 40d) einen Abstand aufweisen, der im wesentlichen der Öffnung (16b) der Aussparung (16) entspricht, und dass das erste und zweite Kreissegment (40a, 40b) einen Durchmesser aufweisen, der im wesentlichen dem Durchmesser der Aussparung (16) entspricht.

9. Halterung für Behandlungsbehälter zur Gewebepräparation, mit einem Boden (41), an dem ein Befestigungselement (6) ausgeformt ist, das mit einem Transportteller (15) zusammenwirkt, der einen umlaufenden Rand (15c) definiert, **dadurch gekennzeichnet, dass** am Befestigungselement (6) eine Nase (36) ausgeformt ist, die im eingesetzten Zustand des Behandlungsbehälters (17) an eine Prägung (32) am Transportteller (15) anschlägt.

10. Halterung nach Anspruch 9, **dadurch gekennzeichnet, dass** das Befestigungselement (6) symmetrisch um einen Mittelpunkt (39) des Behandlungsbehälters (17) aufgebaut ist.

11. Halterung nach Anspruch 9, **dadurch gekennzeichnet, dass** das Befestigungselement (6) aus einem ersten und zweiten Kreissegment (40a, 40b) und aus einer ersten und zweiten die Kreissegmente verbindenden Steg (40c, 40d), aufgebaut ist, wobei der erste und der zweite Steg (40c, 40d) einen Abstand aufweisen, der im wesentlichen der Öffnung (16b) der Aussparung (16) entspricht, und dass das erste und zweite Kreissegment (40a, 40b) einen Durchmesser aufweisen, der im wesentlichen dem Durchmesser der Aussparung (16) entspricht.

12. Halterung nach Anspruch 9, **dadurch gekennzeichnet, dass** das Befestigungselement (6) einen Abstand definiert der aus einem Abstandselement (38) zwischen dem Boden (33) und einer Scheibe (35) bestimmt ist, wobei der Abstand im wesentlichen der dicke eines Randes (15c) des Transporttellers (15) entspricht und wobei an der Scheibe (35) die Nase (36) ausgebildet ist.

13. Halterung nach Anspruch 12, **dadurch gekennzeichnet, dass** die Scheibe an der Unterseite des Transporttellers (15) anliegt.

14. Halterung nach Anspruch 13, **dadurch gekennzeichnet, dass** die Prägung (32) an der Unterseite (15b) des Transporttellers (15) vorgesehen ist.

15. Halterung nach Anspruch 9, **dadurch gekennzeichnet, dass** die unterschiedlichen Typen der Behandlungsbehälter (17) ein identisches Befestigungselement (6) zum Haltern am Transportteller (15) aufweisen.
